# EUROPEAN PATENT SPECIFICATION

(11) **EP 3 153 305 B1**
(45) Date of publication and mention of the grant of the patent: **15.05.2019**
(21) Application number: 15805763.8
(22) Date of filing: 09.06.2015
(51) Int. Cl.: B29C 64/112, B33Y 80/00, B33Y 70/00, B33Y 10/00

(54) **METHOD FOR PRODUCING THREE-DIMENSIONAL MODEL**
VERFAHREN ZUR HERSTELLUNG EINES DREIDIMENSIONALEN MODELLS
PROCÉDÉ DE PRODUCTION DE MODÈLE TRIDIMENSIONNEL

(30) Priority: 09.06.2014 JP 2014118945
(43) Date of publication of application: 12.04.2017
(73) Proprietor: Mimaki Engineering Co., Ltd., Tomi-City, Nagano 389-0512 (JP)
(72) Inventor: TABAYASHI Isao, Tomi-city Nagano 389-0512 (JP)
(74) Representative: Hinkelmann, Klaus
(86) International application number: PCT/JP2015/066575
(87) International publication number: WO 2015/190469

(56) References cited:
- EP-A1- 2 161 312
- JP-A- H08 231 849
- JP-A- 2000 351 907
- JP-A- 2003 226 724
- JP-A- 2010 155 926
- JP-A- 2013 151 703
- JP-A- 2015 078 255
- US-A1- 2003 092 820
- US-A1- 2010 007 692
- US-A1- 2013 026 683

## Description

### TECHNICAL FIELD

The present invention relates to a method of manufacturing a three-dimensional object.

### BACKGROUND ART

In recent years, a manufacturing method for a three-dimensional object by a laminate forming method using an ink jet scheme is being developed.

Patent Literature 1 describes a method of manufacturing a three-dimensional object, which is a method that orderly laminates a three-dimensional object forming material that cures by a predetermined curing process so as to be supported on a plurality of predetermined support bodies based on cross-sectional data of a formation target three-dimensional object to form the three-dimensional object, in which cationic ultraviolet curing resin is used as the three-dimensional object forming material, and a predetermined amount of ultraviolet light is radiated on the cationic ultraviolet curing resin as the predetermined curing process.

Further, Patent Literature 2 describes a three-dimensional object forming apparatus provided with an ink head that discharges UV curing ink that cures by radiation of ultraviolet light, a laser head that radiates ultraviolet light beam on the UV curing ink discharged from the ink head to cure the UV curing ink, a smoothing surface member as a reference surface for laminating the UV curing ink discharged from the ink head, and a control unit that respectively moves the ink head, the laser head, and the smoothing surface member so that the UV curing ink is laminated at a predetermined position on the smoothing surface member.

### CITATION LIST

### PATENT LITERATURE

Patent Literature 1: Japanese Unexamined Patent Publication No. H11-34170 (published on February 9, 1999)
Patent Literature 2: Japanese Unexamined Patent Publication No. 2005-205670 (published on August 4, 2005)

US 2003/0092820 A1 discloses according to its claim 1 a UV curable composition useful for three-dimensional inkjet printing comprising (i) at least one UV curable urethane (meth)acrylate resin; (ii) at least one wax; (iii) at least one (meth)acrylate diluent; (iv) at least one photoinitiator; and (v) at least one polymerization inhibitor; wherein the amount of wax (ii) is sufficient to phase change the UV curable composition after jetting. Disclosed is moreover a selective deposition modeling method of forming at least a portion of a three-dimensional object on a layer-by-layer basis, comprising the steps of:
a) generating computer data corresponding to layers of said object;
b) providing a build material which is a fluid of at least one temperature between 40°C. and about 90°C., comprising the composition of claim 1;
c) elevating the temperature of said material to a temperature above 70°C. to about 90°C.;
d) selectively dispensing said material at said elevated temperature according to said computer data to form a layer of said object;
e) providing an environment that lowers the temperature of said dispensed material into a solid state;
f) subjecting the solid dispensed material to a UV light to cure the material; and
g) repeating steps d), e) and f) to form subsequent layers until at least said portion of the object is formed.

### SUMMARY

### TECHNICAL PROBLEMS

In the method described in Patent Literature 1, time is required for completely curing the resin since the cationic ultraviolet curing resin is used as the three-dimensional object forming material, and if a bulky three-dimensional object is to be formed, there is a problem with a form maintaining ability. Further, Patent Literature 2 does not consider about ink used in the three-dimensional object forming apparatus.

Thus, the inventors conducted a keen study, as a result of which they have found that the curing time may be shortened by using radically polymerized ultraviolet curing ink.

However, if a three-dimensional object is formed using the radically polymerized ultraviolet curing ink, there may be a case where interlayer adherence is insufficient, or a case where distortion of the three-dimensional object becomes large.

The present disclosure has been made in view of such problems, and it primarily aims to provide a technique for manufacturing a three-dimensional object having high interlayer adherence and small distortion using radically polymerized ultraviolet curing ink.

### SOLUTIONS TO THE PROBLEMS

To solve the above problems, a manufacturing method for a three-dimensional object according to the present invention is a manufacturing method for a three-dimensional object using a laminate forming method using an ink jet scheme, wherein a radically polymerized ultraviolet curing ink having an elongation percentage within twelve hours after a curing of 130% or greater is used as a modeling agent, wherein the elongation percentage of the ultraviolet curing ink within twelve hours after the curing is less than 300%, wherein "elongation percentage" of the radically polymerized ultraviolet curing ink refers to a ratio of elongation obtained before a print layer had a crack on a sample piece with a thickness of 90µm, a width of 8 cm, and a length of 15 cm having the radically polymerized ultraviolet curing ink printed in a single layer over its entire surface, and having an elongation percentage in a long direction of at least 300%, while the sample piece is elongated in the long direction at a speed of 50 mm/min,
wherein in the laminate forming method, printing and curing of the modeling agent is performed in layer units in that the model agent is discharged from an inkjet head and cured to form a layer on the layer formed by discharging the modeling agent from the inkiet head and curing to form a layer, and wherein
in forming two adjacent layers, the ultraviolet curing ink is printed, after which ultraviolet light is radiated to semi-cure the ultraviolet curing ink, and the ultraviolet curing ink is further printed on the semi-cured ultraviolet curing ink, after which the ultraviolet light is radiated to cure the semi-cured ultraviolet curing ink.

When a three-dimensional object is to be manufactured by the laminate forming method using the ink jet scheme, the soft, radically polymerized ultraviolet curing ink having the elongation percentage within twelve hours after the curing of 130% or greater has a high wettability to ink laminated thereon, thus interlayer adherence of the three-dimensional object can be improved, and a contact angle of ink droplets relative to the already-formed layer becomes small, so distortion in the three-dimensional object caused by distortion generated upon laminating hard objects can be suppressed.

By using the radically polymerized ultraviolet curing ink having the elongation percentage within twelve hours after the curing of less than 300, a shape of the three-dimensional object to be obtained can more suitably be retained.

In the manufacturing method for a three-dimensional object of the present invention, the ultraviolet curing ink preferably has a reduced elongation percentage after 180 hours from the curing than within twelve hours after the curing.

In manufacturing the three-dimensional object by the laminate forming method using the ink jet scheme, when a predetermined amount of time has elapsed since having cured the radically polymerized ultraviolet curing ink in each layer, the elongation percentage of the radically polymerized ultraviolet curing ink decreases and results in greater hardness in each layer, a strength of the three-dimensional object to be obtained can be improved.

Further, in the manufacturing method for a three-dimensional object of the present invention, in forming two adjacent layers, the ultraviolet curing ink is printed, after which ultraviolet light is radiated to semi-cure the ultraviolet curing ink, and the ultraviolet curing ink is further printed on the semi-cured ultraviolet curing
ink, after which the ultraviolet light is radiated to cure the semi-cured ultraviolet curing ink.

According to the above configuration, the radically polymerized ultraviolet curing ink in the semi-cured state has greater wettability to the ink laminated thereon, so the interlayer adherence can further be improved.

A non-claimed kit for manufacturing a three-dimensional object includes a modeling agent that is radically polymerized ultraviolet curing ink having an elongation percentage within twelve hours after the curing of 130% or greater but less than 300%. Since this can be used in the manufacturing method for a three-dimensional object according to the present invention as aforementioned, a three-dimensional object with high interlayer adherence can be manufactured.

It should be noted that a three-dimensional object manufactured by a laminate forming method using an ink jet scheme, that uses radically polymerized ultraviolet curing ink having an elongation percentage within twelve hours after the curing of 130% or greater as a modeling agent can be obtained.

### EFFECT OF THE INVENTION

According to the present invention, a three-dimensional object having high interlayer adherence and small distortion can be manufactured using radically polymerized ultraviolet curing ink.

### BRIEF DESCRIPTION OF DRAWING

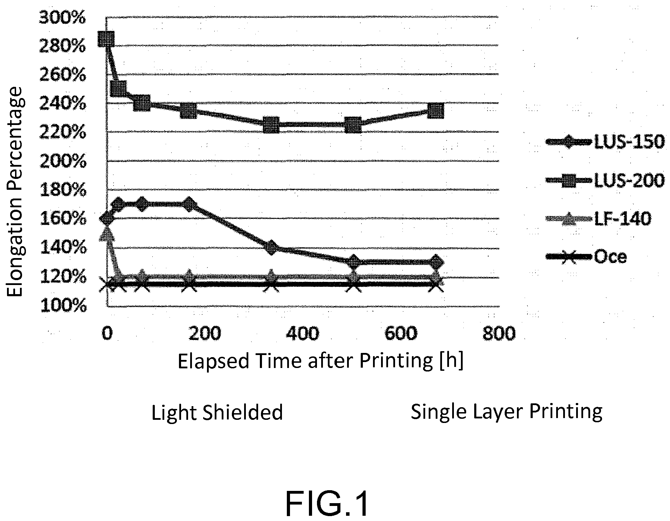

FIG. 1 is a graph illustrating characteristics of respective modeling agents.

### DESCRIPTION OF EMBODIMENTS

### <Manufacturing Method for Three-Dimensional Object according to the Present Invention>

A manufacturing method for a three-dimensional object of the present invention is a manufacturing method for a three-dimensional object using a laminate forming method using an ink jet scheme, and radically polymerized ultraviolet curing ink having an elongation percentage within twelve hours after the curing of 130% or greater is used as a modeling agent. When a three-dimensional object is to be manufactured by the laminate forming method using the ink jet scheme based on this method, the soft, radically polymerized ultraviolet curing ink having the elongation percentage within twelve hours after the curing of 130% or greater has a high wettability to an already-formed ink layer of ultraviolet curing ink, thus interlayer adherence of the three-dimensional object can be improved. Due to this, exfoliation can be suppressed from occurring at a layer interface even if an impact is applied (becoming stronger against impacts).

Further, the radically polymerized ultraviolet curing ink having the elongation percentage within twelve hours after the curing of 130% or greater has the high wettability to the already-formed ink layer of ultraviolet curing ink, a contact angle becomes small, and ink droplets will not be forming bulges. Due to this, distortion in the three-dimensional object caused by distortion generated upon laminating hard objects can be suppressed.

On the other hand, in the ultraviolet curing ink having the elongation percentage within twelve hours after the curing of less than 130%, the wettability upon laminating the ultraviolet curing ink is not sufficient, and exfoliation tends to occur at the layer interface.

Further, in the ultraviolet curing ink having the elongation percentage within twelve hours after the curing of less than 130%, the contact angle of the ink droplets of the newly adhered ultraviolet curing ink becomes large, and it comes to be in a bulged state. Thus, if the ultraviolet light is radiated to cure the ultraviolet curing ink in this state, the ink droplets with the large contact angle are laminated and the distortion is thereby generated.

In the present description, "laminate forming method using ink jet scheme" refers to a method of forming a three-dimensional object by laminating print layers printed by the ink jet scheme. This method may include repeating a layer forming step of forming a modeling agent layer, and a curing step of curing the modeling agent by radiating the ultraviolet light on the modeling agent layer.

Further, "curing" of the radically polymerized ultraviolet curing ink refers to the radically polymerized ultraviolet curing ink being solidified by polymerizable components of the radically polymerized ultraviolet curing ink undergo radical polymerization by the radiation of the ultraviolet light. In the radically polymerized ultraviolet curing ink, a timing when the curing takes place may be regarded the same as a timing when a predetermined amount of the ultraviolet light has been radiated.

Further, "elongation percentage" of the radically polymerized ultraviolet curing ink refers to a ratio by which the print layer of the radically polymerized ultraviolet curing ink elongated until it broke upon elongating by applying a certain load using a tensile strength testing apparatus (where the original length is 100%). Specifically, it refers to a ratio of elongation obtained before a print layer had a crack on a sample piece with a thickness of 90 µm, a width of 8 cm, and a length of 15 cm having the radically polymerized ultraviolet curing ink printed in a single layer over its entire surface, and having an extremely high elongation percentage in a long direction (having the elongation percentage of at least 300%), while the sample piece is elongated in the long direction at a speed of 50 mm/min.

Further, "modeling agent" refers to a substance that forms the three-dimensional object by modeling (curing).

Further, "interlayer adherence" of the three-dimensional object refers to an adhesive strength between layers formed by the laminate forming method, and "improve" refers to suppressing the three-dimensional object from exfoliating at an adjacent layer interface when the three-dimensional object receives an impact. Further, "distortion" in the three-dimensional object refers to deformation of the shape of the three-dimensional object caused by stress among ink cured particles when the print layers are laminated.

Further, in an embodiment, a manufacturing method for a three-dimensional object according to the present invention is a manufacturing method for a three-dimensional object by laminating a plurality of print layers, and each print layer is formed by printing the modeling agent being the radically polymerized ultraviolet curing ink having the elongation percentage within twelve hours after the curing of 130% or greater and thereafter curing by radiating ultraviolet light.

### [Modeling Agent]

A modeling agent used in the manufacturing method for a three-dimensional object according to the present invention is radically polymerized ultraviolet curing ink having the elongation percentage within twelve hours after the curing of 130% or greater. The ultraviolet curing ink includes polymerizable component and photoinitiator, and further radiosensitizer, polymerization inhibitor, colorant, and other components may be added thereto.

As a light source of the ultraviolet light radiated for curing the modeling agent, a light source used for UV curing ink jet ink that is conventionally known may be employed. For example, metal halide lamp, xenon lamp, carbon arc lamp, chemical lamp, low pressure mercury lamp, and high pressure mercury lamp may be exemplified. As a commercial product, for example, H lamp, D lamp, and V lamp manufactured by FusionSystem may be exemplified. Further, the predetermined amount of ultraviolet light required to cure the modeling agent preferably achieves curing by radiation of 50 to 1,000 mJ/cm² in integrated light quantity, and more preferably achieves curing by 50 to 200 mJ/cm².

A multifunctional agent may be used as the modeling agent to be used in the manufacturing method for a three-dimensional object according to the present invention. Due to this, sensitivity to light such as the ultraviolet light is improved. By using the multifunctional agent, curing can be achieved by an ultraviolet light emitting semiconductor element such as a ultraviolet-light-emitting diode (UV-LED), and an ultraviolet light emitting semiconductor laser. The reason why the sensitivity of such a modeling agent is superior is as follows. That is, the modeling agent is modelized (cured) at a low illuminance due to a cross-linking effect brought forth by containing multifunctional monomer. In addition, since the photoinitiator and radiosensitizer suitable for the light source can be selected, as a result of which the sensitivity to light can be increased. It should be noted that a content percentage of the multifunctional monomer in the modeling agent can suitably be adjusted such that the elongation percentage of the modeling agent within twelve hours after the curing becomes 130% or greater.

### (Polymerizable Component)

The modeling agent preferably includes polymerizable component. The polymerizable component is not particularly limited, however, it is preferable to include (meth)acrylic monomer.

There is no particular limitation to the (meth)acrylic monomer, and publicly known (meth)acrylic monomer may be used. For example, monofunctional methacrylate having substituent such as methyl, ethyl, propyl, butyl, amyl, 2-ethyl hexyl, isooctyl, nonyl, dodecyl, hexadecyl, octadecyl, cyclohexyl, benzyl, methoxy ethyl, butoxy ethyl, phenoxy ethyl, nonyl phenoxy ethyl, glycidyl, dimethyl amino ethyl, diethyl aminoethyl, isobornyl, dicyclopentanyl, dicyclopen tenyl, dicyclopentenyloxy ethyl, isobonyl, and the like, dimethacrylate such as 1, 3-butylene glycol, 1, 4-butane diol, 1, 5-pentane diol, 3-methyl, 1, 5-pentane diol, 1, 6-hexane diol, neopentyl glycol, 1, 8-octane diol, 1, 9-nonane diol, tricyclodecane dimethanol, ethylene glycol, polyethylene glycol, propylene glycol, dipropylene glycol, tripropylene glycol, polypropylene glycol, and the like, dimethacrylate of tris-(2-hydroxyethyl)isocyanurate, diol dimethacrylate obtained by adding 4 mol or more ethylene oxide or propylene oxide to 1 mol of neopentyl glycol, diol dimethacrylate obtained by adding 2 mol or greater ethylene oxide or propylene oxide to 1 mol of bisphenol A, and polyfunctional methacrylate such as triol di- or tri-methacrylate obtained by adding 3 mol or greater ethylene oxide or propylene oxide to 1 mol of trimethylolpropane, diol dimethacrylate obtained by adding 4 mol or greater ethylene oxide or propylene oxide to 1 mol of bisphenol A, trimethylolpropane trimethacrylate, pentaerythritol trimethacrylate, dipentaerythritol polymethacrylate, ethylene oxide-modified phosphate methacrylate, and ethylene oxide-modified alkylphosphate methacrylate may be exemplified.

Further, strength and solvent resistance of the modeling agent can be increased by using the polyfunctional monomers in combination. As other polyfunctional monomers that the modeling agent may include is not particularly limited, and publicly known polyfunctional monomers can be used. For example, diacrylate such as 1, 3-butylene glycol, 1, 4-butane diol, 1, 5-pentane diol, 3-methyl, 1, 5-pentane diol, 1, 6-hexane diol, neopentyl glycol, 1, 8-octane diol, 1, 9-nonane diol, trycyclodecane dimethanol, ethylene glycol, polyethylene glycol, propylene glycol, dipropylene glycol, tripropylene glycol, polypropylene glycol, and the like, tris-(2-hydroxyethyl)isocyanurate diacrylate, diol diacrylate obtained by adding 4 mol or greater ethylene oxide or propylene oxide to 1 mol of neopentyl glycol, diol diacrylate obtained by adding 2 mol of ethylene oxide or propylene oxide to 1 mol of bisphenol A, triol di- or tri-acrylate obtained by adding 3 mol or greater ethylene oxide or propylene oxide to 1 mol of trimethylolpropane, diol diacrylate obtained by adding 4 mol or greater ethylene oxide or propylene oxide to 1 mol of bisphenol A, hexamethylene diacrylate, polyfunctional acrylate such as trimethylpropane triacrylate, pentaerythritol triacrylate, dipentaerythritol polyacrylate, ethylene oxide-modified phosphate acrylate, and ethylene oxide-modified alkylphosphate acrylate, and polymer compounds having vinylether group such as di- or tri-vinylether compound, including acrylate 2-(2-vinyloxyethoxy)ethyl, ethylene glycoldivinyl ether, diethylene glycoldivinyl ether, triethylene glycoldivinyl ether, propylene glycoldivinyl ether, dipropylene glycoldivinyl ether, butane diol divinyl ether, hexane diol divinyl ether, cyclohexane dimethanol divinyl ether, and trimethylolpropane trivinyl ether, may be exemplified. Each of these may be used alone or in combination of two or more types.

The modeling agent may include reactive oligomer such as acrylate oligomer having a high molecular weight, from a viewpoint of improving curing coating film performance. An amount of the reactive oligomer is preferably small in order to reduce a possibility by which satellites are generated upon ink jet spraying. For example, the amount of the reactive oligomer is preferably an amount that does not exceeds 20 weight % relative to an entire amount of the polymerizable component.

As the reactive oligomer, urethane acrylate oligomer, epoxy acrylate oligomer, polyester acrylate oligomer, and the like may be exemplified, and two or more types may be used together.

### (Photoinitiator)

The modeling agent preferably includes photoinitiator. As the photoinitiator, radical polymerizable photoinitiator may be used.

As the radical polymerizable photoinitiator, for example, benzoin isobutyl ether, 2, 4-diethyl thioxanthone, 2-isopropylthioxanthone, benzyl, 2, 4, 6-trimethyl benzoil diphenylphosphine oxide, 6-trimethyl benzoil diphenylphosphine oxide, 2-benzyl-2-dimethyl amino-1-(4-morpholinophenyl)-butane-1-one, bis(2, 6-dimethoxybenzoil)-2, 4, 4-trimethyl pentylphosphine oxide, and the like may suitably be used. Further, as molecule cleavage-type other than the aforementioned, 1-hydroxy
cyclohexylphenylketone, benzoin ethyl ether, benzyl dimethyl ketal, 2-hydroxy-2-methyl-1-phenylpropane-1-one, 1-(4-isopropylphenyl)-2-hydroxy-2-methyl propane-1-one, and 2-methyl-1-(4-methyl thiophenyl)-2-morpholinopropan-1-one and the like may be employed. Further, hydrogen-abstraction type photoinitiator such as benzophenone, 4-phenylbenzophenone, isophthalphenone, 4-benzoil-4'-methyl diphenyl sulfide and the like may be employed. These may be used solely, or plural types may be mixed.

Further, if a UV-LED lamp is to be used as the light source of the ultraviolet light to be radiated for curing the modeling agent, the photoinitiator is preferably selected with consideration to light emitting peak wave of the UV-LED. For example, the photoinitiator suitable for the use of the UV-LED may be exemplified as 2-benzyl-2-dimethyl amino-1-(4-morpholinophenyl)-butane-1-one, 2-(dimethyl amino)-2-[(4-methyl phenyl)methyl]-1-(4-morpholinophenyl)-butane-1-one), bis(2, 4, 6-trimethyl benzoil)phenyl phosphine oxide, 2, 4, 6-trimethyl benzoil-diphenyl-phosphine oxide, 2, 4-diethyl thioxanthone, 2-isopropylthioxanthone, and the like.

### (Radiosensitizer)

Further, as the radiosensitizer for the photoinitiator, for example, trimethylamine, methyl dimethanolamine, triethanolamine, p-diethyl amino acetophenone, p-dimethyl aminoethyl benzoate, p-dimethyl amino isoamyl benzoate, N, N-dimethyl benzylamine, and 4, 4'-bis(diethyl amino)benzophenone and the like, which are amines that does not create an addition reaction with the polymerizable components, may be used in combination.

### (Polymerization Inhibitor)

The modeling agent may be added with a polymerization inhibitor such as hydroquinone, metoquinone, di-t-butyl hydroquinone, P-methoxyphenol, butyl hydroxy toluene, nitrosoamine salt, and the like to increase ink preservation stability, by a range of 0.01 to 2 weight % within the modeling agent.

### (Colorant)

The modeling agent may be coloring ink including colorant, or may be ink that does not include colorant. If the modeling agent includes the colorant, a three-dimensional object colored to a desired color can be obtained. If the modeling agent is ink not containing colorant, an uncolored three-dimensional object can be obtained. The colorant may be pigment, or may be dye.

If a thick three-dimensional object is to be manufactured, translucent or colored three-dimensional object can be obtained by using dye as the colorant. As the dye, respective types of dye that were conventionally used in ink jet recording, such as direct dye, acid dye, edible dye, basic dye, reactive dye, disperse dye, vat dye, soluble vat dye, reactive disperse dye, and oil dye may be exemplified. Among them, the oil ink is especially preferable in regards to its solubility to ink polymerizable components and color expression on cured objects.

It is preferable to employ pigment as the coloring material to obtain opaque three-dimensional object, and for example, nonorganic pigment and organic pigment may be employed.

As the nonorganic pigment, titanium oxide, ferric oxide, and carbon black manufactured by publicly known methods such as contact method, furnace method, and thermal method may be used. Further, as the organic pigment, azo pigment (including azo lake, insoluble azo pigment, condensed azo pigment, chelate azo pigment, and the like), polycyclic pigment (such as phthalocyanine pigment, perylene pigment, perynone pigment, anthraquinone pigment, quinacridone pigment, dioxazine pigment, thioindigo pigment, isoindolinone pigment, and quinophthalone pigment), pigment chelate (such as basic dye chelate and acidic dye chelate), nitro pigment, nitroso pigment, aniline black and the like may be used.

As specific examples of the pigment, as the carbon black, No.2300, No.900, MCF88, No.33, No.40, No.45, No.52, MA7, MA8, MA100, No.2200B and the like manufactured by Mitsubishi Chemical, Raven 5750, 5250, 5000, 3500, 1255, 700 manufactured by Columbia, Regal 400R, 330R, 660R, Mogul L, 700, Monarch 800, 880, 900, 1000, 1100, 1300, 1400 manufactured by Cabot, and Color Black FW1, FW2, FW2V, FW18, FW200, Color Black S150, S160, S170, Printex35, U, V, 140U, Special Black6, 5, 4A, 4 manufactured by Degussa may be exemplified.

As pigment used for yellow ink, C.I. pigment yellow 1, 2, 3, 12, 13, 14, 16, 17, 73, 74, 75, 83, 93, 95, 97, 98, 109, 110, 114, 120, 128, 129, 138, 150, 151, 154, 155, 180, 185, 213 may be exemplified.

Further, as pigment used for magenta ink, C.I. pigment red 5, 7, 12, 48(Ca), 48(Mn), 57(Ca), 57:1, 112, 122, 123, 168, 184, 202, 209, C.I. pigment violet 19 may be exemplified.

Further, as pigment used for cyan ink, C.I. pigment blue 1, 2, 3, 15:3, 15:4, 60, 16, 22 may be exemplified.

An average particle diameter of the pigment is preferably within a range of 10 to 300 nm, and more preferably about 50 to 200 nm. Further, an added amount of the colorant is preferably in a range of 1 to 20 weight % relative to an entire amount of the ink, to obtain sufficient image density and light resistance in a printed image.

The pigment preferably uses pigment dispersing agent for a purpose of increasing dispersion stability to the polymerizable component and the like. Specifically, AJISPER (registered trademark) PB821, PB822, PB817 manufactured by Ajinomoto Fine-Techno Co., Inc., SOLSPERSE (registered trademark) 24000GR, 32000, 33000, 39000 manufactured by Avecia Ltd., DISPARLON (registered trademark) DA-703-50, DA-705, DA-725 manufactured by Kusumoto Chemicals Ltd. may be exemplified, however, no limitation is made hereto. Further, a used amount of polymeric dispersion agent is preferably in a range of 10 to 80 weight % relative to the pigment, and especially preferable in the range of 20 to 60 weight %. 10 weight % or more of used amount can achieve sufficient dispersion stability, and 80 weight % or less thereof suppresses ink viscosity from becoming high, and discharging stability is improved.

### (Viscosity of Modeling Agent)

Although it may depend on the ink jet device to be used, the modeling agent is preferably designed such that respective monomers come to have a viscosity after their combination of about 1 to 100 mPa•sec. Although the viscosities of the modeling agent and the support material upon discharging by ink jet may be different, it is preferable to design them to be close values in considering ink jet discharge performance and curing performance, and it is more preferable if they are same.

### (Other Component)

The modeling agent may have non-reactive resin such as acryl resin, epoxy resin, terpene phenol resin, and rosin ester combined therein for a purpose of providing adherence to a print base material. Additives are preferably kept at a small amount. That is because a possibility of satellite generation can be reduced, and further a decrease in the solvent resistance can be prevented.

Aside from the above, the modeling agent may be added with surfactant, leveling additive, matting agent, and polyester-based resin, polyurethane-based resin, vinyl-based resin, acryl-based resin, rubber-based resin, and wax for adjusting film property as needed, within a range by which the effect of the present invention is not compromised and the discharging stability is not compromised.

### (Manufacturing Method of Modeling Agent)

As a manufacturing method for the modeling agent, for example, if pigment is to be contained, a preparation method may be exemplified in which a mixture in which the pigment, the polymerizable component, the polymeric dispersion agent if needed, and resin are added is inputted to a conventionally known disperser such as a bead mill to diffuse the pigment, after which the photoinitiator is added, and further additives such as surface tension regulator is added as needed, and then stir and dissolve the mixture. The modeling agent may be manufactured by making a high-density pigment dispersion solution (mill base) using the conventionally known disperser such as a bead mill in advance, after which the polymerizable component and additives in which the photoinitiator has been dissolved are stirred and mixed.

As a stirring device and a disperser for dispersing the pigment, for example, conventionally known dispersers such as a bead mill, an ultrasound homogenizer, a high-pressure homogenizer, a paint shaker, a ball mill, a roll mill, a sand mill, a sand grinder, a dinomill, a dispermat, an SC mill, and a nanomizer may be exemplified.

### (Elongation Percentage of Modeling Agent)

The modeling agent used in the manufacturing method for a three-dimensional object according to the present invention has the elongation percentage within twelve hours after the curing of 130% or greater, and more preferably 150% or greater. The soft, radically polymerized ultraviolet curing ink having the elongation percentage within twelve hours after the curing of 130% or greater has greater wettability to the ink laminated thereon, so the interlayer adherence of the three-dimensional object can further be improved.

Further, the modeling agent has the elongation percentage within twelve hours after the curing less than 300%, and more preferably 270% or less. By forming the three-dimensional object using the radically polymerized ultraviolet curing ink with the elongation percentage within twelve hours after the curing less than 300%, the shape of the three-dimensional object to be formed can suitably be maintained. On the other hand, if the elongation percentage within twelve hours after the curing becomes 300% or greater, the shape cannot be maintained appropriately.

Further, the modeling agent preferably has a reduced elongation percentage after 180 hours from the curing than within twelve hours after the curing, and it is especially preferable for the elongation percentage to decrease over time. When the three-dimensional object is to be manufactured by the laminate forming method using the ink jet scheme, due to having the elongation percentage of the radically polymerized ultraviolet curing ink to decrease when a predetermined time has elapsed since the radically polymerized ultraviolet curing ink in the respective layers had been cured, resulting in increased hardness in the respective layers, the three-dimensional object to be obtained can have improved strength and time required until final curing can be elongated, thus the generation of the distortion by lamination can further be suppressed.

It should be noted that the elongation percentage of the modeling agent may be measured for example by the following method. That is, a rate of elongation exhibited before a print layer is broken can be measured by printing the modeling agent on a sample piece, elongating it by applying a certain load using the tensile strength testing apparatus, and visually confirming a generation of a crack in the print layer of the modeling agent.

Further, the modeling agent can be prepared by suitably selecting the aforementioned polymerizable component, photoinitiator, coloring agent, and other component while using the elongation percentage measured by the aforementioned method as its index. For example, by adding the polyfunctional monomer to the monofunction monomer, or by adding an excessive amount of photoinitiator, the modeling agent having the aforementioned elongation percentage can suitably be prepared. Further, publicly sold radically polymerized ultraviolet curing ink having the elongation percentage measured by the aforementioned method satisfying the aforementioned condition may be purchased.

As a specific example of the modeling agent having the elongation percentage within twelve hours after the curing of 130% or greater, for example, UV ink LF-140 (Mimaki Engineering Co., Ltd., components: acrylic acid ester, 2-acrylic acid hexamethylene, initiator, coloring agent, additive) having the elongation percentage within twelve hours after the curing of 150%, LUS-150 (Mimaki Engineering Co., Ltd., components: monomer, diphenyl-2, 4, 6-trimethyl benzoyl phosphine oxide, initiator, coloring agent, additive) having the elongation percentage within twelve hours after the curing of 160%, and LUS-200 (Mimaki Engineering Co., Ltd., components: 2-phenoxyethyl acrylate, isobornyl acrylate, vinyl monomer, diphenyl-2, 4, 6-trimethyl benzoyl phosphine oxide, tetrahydrofurfuryl acrylate, coloring agent, substituted amine oligomer, 2, 4-diethyl thioxanthene-9-one, acrylic monomer, stabilizer, dispersion agent, aliphatic urethane acrylate 2-phenoxyethanol) having the elongation percentage within twelve hours after the curing of 270% may be exemplified.

### [Modeling Agent Printing Step]

The manufacturing method for a three-dimensional object according to the present invention preferably includes a modeling agent printing step of printing the modeling agent using the ink jet scheme.

By printing the modeling agent using the ink jet scheme, arbitrarily desired shape can highly accurately be formed. Further, the ink jet scheme can be digitally controlled, and thus it is preferable for being able to print with no contact to a print target object and the modeling agent formed by having been previously discharged and cured. As the ink jet scheme, any of the conventionally known schemes may be used. For example, a method of discharging droplets using vibration of a piezoelectric element (recording method using an ink jet head that forms ink droplets by mechanical deformation of electrostrictive element), and a method using thermal energy may be exemplified. It should be noted that the printing method may be of a single scan (pass) scheme, or of a multi scan (pass) scheme.

The modeling agent used in the manufacturing method for a three-dimensional object according to the present invention is superior to its adhesiveness to plastic materials. This is due to a surface of the plastic material becomes wet by the monomers through the process of curing after the monomers had struck the plastic material. Thus, printing can be performed easily on the surface of plastic objects and the like. As the plastic material, for example, ABS (acrylonitrile butadiene styrene) resin, ABS-based polymer blends such as PVC (polyvinyl chloride)/ABS resin, PA (polyamide)/ABS resin, PC (polycarbonate)/ABS resin, PBT (polybutylene terephthalate)/ABS and the like, AAS (acrylonitrile acryl rubber styrene) resin, AS (acrylonitrile styrene) resin, AES (acrylonitrile ethylene rubber styrene) resin, MS ((meth)acrylic acid ester styrene)-based resin, PC (polycarbonate)-based resin, acryl-based resin, methacryl-based resin, and PP (polypropylene)-based resin, which are used as multi-purpose injection forming plastic, may be exemplified.

Further, as the print target object, a film formed of plastic material such as thermoplastic resin for packaging material may be employed. As the thermoplastic resin film used for food packaging may be exemplified for example as polyethylene terephthalate (PET) film, polystyrene film, polyamide film, polyacrylonitrile film, polyethylene film (LLDPE: linear low-density polyethylene film, HDPE: high-density polyethylene film), polypropylene film (CPP: cast polypropylene film, OPP: oriented polypropylene film), being polyolefin films, polyvinyl alcohol film, and ethylene vinyl alcohol copolymer film. These may be subjected to uniaxial or biaxial stretching process. Further, a film surface may be subjected to respective surface treatments as needed, such as flame treatment and corona discharge treatment.

Further, the ink jet printer includes ultraviolet light radiation sections for radiating ultraviolet light for example at both sides along a main scanning direction of a head. Thus, the ink jet printer can manufacture the three-dimensional object by laminating plural layers, each of which is formed by printing the modeling agent on the print target object, and curing the printed modeling agent by radiating the ultraviolet light from the ultraviolet light radiation sections.

It should be noted that in the present invention, printing and curing of the modeling agent is performed in layer units. That is, the ultraviolet light is radiated onto a print layer after having printed the print layer to cure the print layer, and thereafter printing of the next print layer may be started. Due to this, uncured modeling agent in two adjacent layers is prevented from being mixed, and a desired three-dimensional object can be formed.

Further, in forming two adjacent print layers, a print layer is semi-cured (pinned) by radiating the ultraviolet light onto the print layer after having printed the print layer and the ultraviolet light is radiated to the first print layer after having printed another print layer on the semi-cured print layer to cure the semi-cured print layer. It should be noted that, in this description, "semi-cured" refers to a state in which the ultraviolet curing ink still maintaining the possibility of reacting to the further radiation of the ultraviolet light to further cure while there scarcely is any flowability in the ultraviolet curing ink.

That is, the modeling agent for a subsequent layer may be printed on the modeling agent in a semi-cured state, such that the modeling agent is not completely cured in a first scan, and the modeling agent is cured in a second scan or more. In other words, the modeling agent (radically polymerized ultraviolet curing ink) is printed, after which the ultraviolet light may be radiated to semi-cure the modeling agent (radically polymerized ultraviolet curing ink), and the modeling agent (radically polymerized ultraviolet curing ink) may further be printed on the semi-cured modeling agent (radically polymerized ultraviolet curing ink), after which the ultraviolet light is radiated to cure the semi-cured modeling agent (radically polymerized ultraviolet curing ink).

The modeling agent (radically polymerized ultraviolet curing ink) in the semi-cured state has greater wettability to the ink laminated thereon, so the interlayer adherence of the three-dimensional object can further be improved.

It should be noted that, semi-curing of the print layer (modeling agent) may be performed by radiating the ultraviolet light onto the print layer (modeling agent) at an amount that is less than a required amount of ultraviolet light for curing the modeling agent.

### <Kit for Manufacturing Three-dimensional Object according to Present Invention>

A non-claimed kit for manufacturing a three-dimensional object includes the modeling agent, being the radically polymerized ultraviolet
curing ink having the elongation percentage within twelve hours after the curing of 130% or greater but less than 300%. Since this can be used in the manufacturing method for a three-dimensional object according to the present invention as aforementioned, a three-dimensional object with high interlayer adherence can be manufactured.

As for the modeling agent, the above description applies.

Further, the kit for manufacturing a three-dimensional object may further include other objects. For example, the kit for manufacturing a three-dimensional object may include a support agent for temporarily supporting a support body of the modeling agent, remover for removing the support agent, and the like.

Regardless of the configuration, the kit for manufacturing a three-dimensional object can manufacture a three-dimensional object with high interlayer adherence due to being provided with the aforementioned modeling agent.

Further, the kit for manufacturing a three-dimensional object may include a manual describing procedures for forming the three-dimensional object using the modeling agent.

### <Three-Dimensional Object, not claimed according to Present Invention>

The three-dimensional object is manufactured by the laminate forming method using the ink jet scheme, with the radically polymerized ultraviolet curing ink having the elongation percentage within twelve hours after the curing of 130% or greater but less than 300% as the modeling agent. In other words, the three-dimensional object includes the cured modeling agent.

The three-dimensional object obtained in accordance with the manufacturing method of the present invention has high interlayer adherence, and thus has the advantage that exfoliation is less likely to occur at the interface of the adjacent layers.

As for the modeling agent, the above description applies.

This invention is not necessarily limited to the embodiments described above and may be carried out in many other forms. The technical scope of this invention encompasses any of such modifications, and embodiments obtained by variously combining the technical means described in the embodiments.

### EXAMPLES

### <1.> Measurement of Ink Elongation Percentage

A single layer of the following radically polymerized ultraviolet curing ink is printed on entire surface of sample pieces (white polyvinyl chloride medium with a thickness of 90µm, a width of 8 cm, and a length of 15 cm), and is cured by ultraviolet light radiation.
- LUS-150 (Mimaki Engineering)
- LUS-200 (Mimaki Engineering)
- UV ink LF-140 (Mimaki Engineering)
- UV ink (Oce)

After this, they were preserved under a light-shielded condition, the sample pieces were pulled using a tensile strength testing apparatus (AUTOGRAPH, Shimadzu Corporation) at a predetermined timing at a pulling speed of 50 mm/min in a long direction, and a crack in the print layer of the radically polymerized ultraviolet curing ink of each sample piece was observed. Then, a rate by which it elongated before the crack was observed (until when the print layer was broken) with the original length as 100%, and set the same as the elongation percentage. The result is shown in FIG. 1.

As shown in FIG. 1, LUS-150, LUS-200, and UV ink LF-140 all exhibited the elongation percentage within twelve hours after the curing of 130% or greater. Specifically, the elongation percentage within twelve hours after the curing was 150% for UV ink LF-140, 160% for LUS-150, and 270% for LUS-200. Further, both of UV ink LF-140 and LUS-200 had reduced elongation percentage after 180 hours after the curing than within twelve hours after the curing. On the other hand, UV ink (Oce) had about 100% initial elongation percentage, and no change took place thereafter. Further, although not shown in the graph, LH-100 (Mimaki Engineering) also had the 100% initial elongation percentage similar to UV ink (Oce).

### <2.> Formation of Three-dimensional Object

### (Example 1)

LH-100, LUS-150, LUS-200, and UV ink LF-140 are respectively used as the modeling agent, and three-dimensional objects were obtained by the following procedures 1) to 4).
1) By using UJF-3042HG printer manufactured by Mimaki Engineering Co., Ltd., modeling agent color ink was printed in a single layer on a flat surface based on stereo data, and support agent ink was printed in a single layer thereon based on non-stereo data. This printer includes a UV-LED that radiates ultraviolet light provided at an end portion of a head in a main scanning direction, and the ultraviolet light is radiated onto the printed agent using this UV-LED. The ultraviolet light radiated hereof was 50 to 1,000 mJ/cm². The modeling agent cured as a result of this ultraviolet light radiation.
2) 1) was repeated, and another print layer was laminated.
3) The support agent was dissolved and removed.
4) According to the above, the three-dimensional objects formed by the modeling agents were obtained. The formed three-dimensional object were rested for 12 to 600 hours.

### (Example 2)

LH-100, LUS-150, LUS-200, and UV ink LF-140 are respectively used as the modeling agent, and three-dimensional objects were obtained by the following procedures 1) to 4).
1) By using UJF-3042HG printer manufactured by Mimaki Engineering Co., Ltd., modeling agent color ink was printed in a single layer on a flat surface based on non-stereo data, and thereafter the ultraviolet light was radiated from the UV-LED provided in the printer. The ultraviolet light radiated hereof was 25 to 500 mJ/cm². The modeling agent semi-cured was a result of this ultraviolet light radiation.
2) 1) was repeated, and another print layer was laminated. At this occasion, the semi-cured modeling agent layer was cured by the ultraviolet light radiation for semi-curing the modeling agent layer that is to be laminated in a later step. Further, the topmost semi-cured modeling agent layer was cured by further performing the ultraviolet light radiation.
3) The support agent was dissolved and removed.
4) According to the above, the three-dimensional objects formed by the modeling agents were obtained. The formed three-dimensional object were rested for 12 to 600 hours.

### <3.> Comparative Experiment

### (Experiment 1)

The three-dimensional structures created in the example 1 were naturally dropped from a height of 5 m.

Crack was generated in a laminated layer interface of the three-dimensional object that used LH-100 as the modeling agent when it was naturally dropped from the height of 5 m. On the other hand, the three-dimensional objects that were formed by using LUS-150, LUS-200, and UV ink LF-140 did not suffer any crack in their laminated layer interfaces despite having been naturally dropped from the height of 5 m.

### (Experiment 2)

The three-dimensional structures created in the examples 1 and 2 were naturally dropped from a height of 10 m.

Crack was generated at the laminated layer interface in all of the three-dimensional structures created in the example 1.

Among the three-dimensional structures that were created in the example 2, the three-dimensional objects formed by using LUS-150, LUS-200, and UV ink LF-140 did not suffer any crack. Crack was generated in the three-dimensional object formed by using LH-100.

### (Comparison of Distortion)

Differences between designed values and measured dimensions of the three-dimensional structures that were created in the examples 1 and 2 were compared as distortion.

For the ones that used LH-100 as the modeling agent, all of the three-dimensional structures created in the examples 1 and 2 had greater distortion than the three-dimensional objects created in the examples 1 and 2 using LUS-150, LUS-200, and UV ink LF-140.

In comparing the three-dimensional structures created in the example 1 and the three-dimensional structures created in the example 2 regarding each of LUS-150, LUS-200, and UV ink LF-140, the three-dimensional structures created in the example 2 had less distortion than those of the example 1 in all of the modeling agents.

### INDUSTRIAL APPLICABILITY

The present invention can be utilized in the field of manufacturing three-dimensional objects.

## Claims

1. A manufacturing method for a three-dimensional object using a laminate forming method using an inkjet scheme,
wherein a radically polymerized ultraviolet curing ink having an elongation percentage within twelve hours after a curing of 130% or greater is used as a modeling agent, wherein the elongation percentage of the ultraviolet curing ink within twelve hours after the curing is less than 300%,
wherein "elongation percentage" of the radically polymerized ultraviolet curing ink refers to a ratio of elongation obtained before a print layer had a crack on a sample piece with a thickness of 90 µm, a width of 8 cm, and a length of 15 cm having the radically polymerized ultraviolet curing ink printed in a single layer over its entire surface, and having an elongation percentage in a long direction of at least 300%, while the sample piece is elongated in the long direction at a speed of 50 mm/min,
wherein in the laminate forming method, printing and curing of the modeling agent is performed in layer units in that the model agent is discharged from an inkjet head and cured to form a layer on the layer formed by discharging the modeling agent from the inkjet head and curing to form a layer, and wherein
in forming two adjacent layers, the ultraviolet curing ink is printed, after which ultraviolet light is radiated to semi-cure the ultraviolet curing ink, and
the ultraviolet curing ink is further printed on the semi-cured ultraviolet curing ink, after which the ultraviolet light is radiated to cure the semi-cured ultraviolet curing ink.

2. The manufacturing method for a three-dimensional object according to claim 1, wherein the ultraviolet curing ink has a reduced elongation percentage after 180 hours from the curing than within twelve hours after the curing.

## Patentansprüche

1. Eine Methode zur Herstellung eines dreidimensionales Objektes unter Verwendung einer Laminat - bildenden Methode, bei der ein Tintenstrahlsystem benutzt wird,
worin eine radikalisch polymerisierte ultraviolett härtende Tinte mit einer Dehnung in Prozent von 130 % oder größer innerhalb von zwölf Stunden nach einem Härten als ein Modellierungsagens verwendet wird, worin die Dehnung in Prozent der ultraviolett härtenden Tinte innerhalb von zwölf Stunden nach dem Härten weniger als 300 % beträgt,
worin "Dehnung in Prozent" der radikalisch polymerisierten ultraviolett härtenden Tinte ein Verlängerungsverhältnis bedeutet, das erhalten wurde, bevor eine Druckschicht auf einem Probenstück mit einer Dicke von 90 µm, einer Weite von 8 cm, und einer Länge von 15 cm einen Riss hatte, wobei die radikalisch polymerisierte ultraviolett härtende Tinte in einer einzigen Schicht über dessen gesamte Oberfläche gedruckt ist, und eine Dehnung in Prozent von mindestens 300 % in einer Längsrichtung hat, während das Probenstück in der Längsrichtung mit einer Geschwindigkeit von 50 mm/min gedehnt wird,
worin bei der Laminat - bildenden Methode das Drucken und Härten des Modellierungsagens in Schichteinheiten druchgeführt wird, indem das Modellierungsagens aus einem Tintenstrahlkopf ausgestossen wird und gehärtet wird, um eine Schicht auf der Schicht zu bilden, die durch das Ausstossen des Modellierungsagens durch den Tintenstrahlkopf und Härten zur Bildung einer Schicht gebildet wird, und worin
bei der Bildung von zwei benachbarten Schichten die ultraviolett härtende Tinte gedruckt wird, wonach ultraviolettes Licht ausgestrahlt wird, um die ultraviolett härtende Tinte halb zu härten, und
die ultraviolett härtende Tinte weiterhin auf die halb gehärtete ultraviolett härtende Tinte gedruckt wird, wonach ultraviolettes Licht ausgestrahlt wird, um die halb gehärtete ultraviolett härtende Tinte zu härten.

2. Die Herstellungsmethode für ein dreidimensionales Objekt gemäß Anspruch 1,
worin die ultraviolett härtende Tinte 180 Stunden nach dem Härten eine verringerte Dehnung in Prozent hat als innerhalb von zwölf Stunden nach dem Härten.

## Revendications

1. Procédé de fabrication d'un objet tridimensionnel en utilisant un procédé de production d'un stratifié utilisant un système de jet d'encre,
où une encre à durcissement par polymérisation radicalaire par ultraviolets ayant un pourcentage d'élongation pendant 12 heures après un durcissement de 130 % ou plus est utilisée en tant qu'agent de modélisation, où le pourcentage d'élongation de l'encre à durcissement par ultraviolets pendant douze heures après le durcissement est inférieur à 300 %,
où le « pourcentage d'élongation » de l'encre à durcissement par polymérisation radicalaire se rapporte à un rapport d'une élongation obtenue avant qu'une couche d'impression ait une craquelure sur une pièce échantillon dotée d'une épaisseur de 90 µm, d'une largeur de 8 cm, et d'une longueur de 15 cm ayant de l'encre à durcissement par polymérisation radicalaire par ultraviolets sur une seule couche sur toute sa surface, et ayant un pourcentage d'élongation dans une direction longitudinale d'au moins 300 % tandis que la pièce échantillon est allongée dans la direction longitudinale à une vitesse de 50 mm/min,
où le procédé de production de stratifié, l'impression et le durcissement de l'agent de modélisation sont réalisés par couches unitaires en ce que l'agent de modélisation est délivré à partir d'une tête de jet d'encre et durci pour former une couche sur la couche formée en délivrant l'agent de modélisation de la tête de jet d'encre et le durcissement pour former une couche, et où
en formant deux couches adjacentes, l'encre à durcissement par ultraviolets est imprimée, après quoi de la lumière ultraviolette est émise pour semi-durcir l'encre à durcissement par ultraviolets, et
l'encre à durcissement par ultraviolets est en outre imprimée sur l'encre à durcissement par ultraviolets semi-durcie, après quoi, la lumière ultraviolette est émise pour durcir l'encre à durcissement par ultraviolets semi-durcie.

2. Procédé de fabrication d'un objet tridimensionnel selon la revendication 1,
dans lequel l'encre à durcissement par ultraviolets a un pourcentage d'élongation moindre après 180 heures à partir du durcissement que pendant douze heures après le durcissement.
